# EUROPÄISCHE PATENTSCHRIFT

(11) **EP 1 533 998 B1**
(45) Veröffentlichungstag und Bekanntmachung des Hinweises auf die Patenterteilung: **26.01.2011**
(21) Anmeldenummer: 04022057.6
(22) Anmeldetag: 16.09.2004
(51) Int. Cl.: H04N 5/225, H04N 7/18, G08B 15/00, G02B 7/00, G01N 21/88, G03B 17/56, F16M 11/00

(54) **Verfahren zum Austausch von Kameras**
Method for the exchange of cameras
Méthode pour échanger des appareils photographiques

(30) Priorität: 19.11.2003 DE 10353981
(43) Veröffentlichungstag der Anmeldung: 25.05.2005
(73) Patentinhaber: SICK AG, 79183 Waldkirch (DE)
(72) Erfinder: Alt, Gerhard, 79350 Sexau (DE); Bürger, Jürgen, 79331 Nimburg (DE); Gems, Bernd, Dr., 79194 Gundelfingen (DE); Meier, Reinhold, 79341 Kenzingen (DE)
(74) Vertreter: Manitz, Finsterwald & Partner GbR

(56) Entgegenhaltungen:
- WO-A-03/077530
- DE-A1- 4 100 654
- DE-A1- 10 311 247
- DE-U1- 7 832 160
- DE-U1- 9 413 425
- DE-U1- 20 115 813
- DE-U1- 29 803 605
- US-A- 6 042 277
- US-A1- 2003 093 805

## Beschreibung

Die Erfindung betrifft ein Verfahren zum Austausch zumindest zweier gegeneinander austauschbarer Kameras in einem Kamerasystem, die jeweils in eine definierte Wirkrichtung ausgerichtete optische Bauteile aufweisen.

Optische Systeme der genannten Art werden mittlerweile vermehrt im industriellen Umfeld eingesetzt. Rein beispielhaft sei diesbezüglich die Verwendung von Kameras zu Überwachungszwecken von Gefahrenbereichen genannt, wobei derart eingesetzte Kameras insbesondere mit einer zur Ausleuchtung des Gesichtsfeldes der Kamera dienenden Eigenbeleuchtung versehen sein können, die in die Kamera integriert oder mit dieser fest verbunden ist.
Der industrielle Einsatz der genannten optischen Systeme erfordert es, deren Eigenschaften bezüglich unterschiedlichster Aspekte, wie z.B. Dichtheit gegenüber Fluiden, Temperatureinsatzbereich, Störunempfindlichkeit gegen elektromagnetische Strahlung, Schockbelastbarkeit, etc., zu verbessern. Daneben muss es jedoch auch möglich sein, die optischen Vorrichtungen im Falle eines Defektes komplett auszutauschen.

Ein derartiger Austausch einer optischen Vorrichtung gegen eine andere optische Vorrichtung im Rahmen des eingangs erwähnten optischen Systems gestaltet sich gemäß Stand der Technik oftmals relativ aufwändig, da die neue optische Vorrichtung beim Austausch derart justiert werden muss, dass die Wirkrichtung ihrer optischen Bauteile möglichst exakt der Wirkrichtung der optischen Bauteile derjenigen Vorrichtung entspricht, die vor dem Austausch zum Einsatz kam. Dieser zeitaufwändige Justiervorgang führt bei industriellen Anwendungen oftmals zu wirtschaftlich nachteiligen Stillstandszeiten von Maschinen oder Anlagen. Ferner sind optische Vorrichtungen, welche industriell eingesetzt werden, oftmals mittels bestimmter Parameter oder spezieller Software für individuelle Einsätzfälle konfiguriert, so dass bei einem Austausch einer solchen optischen Vorrichtung auch die neu zum Einsatz gelangende optische Vorrichtung wieder entsprechend konfiguriert werden muss. Auch dies ist auf nachteilige Weise mit Aufwand verbunden, welcher sich wiederum in Maschinen- oder Anlagenstillstandszeiten niederschlägt.

Eine Aufgabe der Erfindung besteht darin, ein Kamerasystem der eingangs genannten Art bereitzustellen, im Rahmen dessen ein Austausch optischer Vorrichtungen mit einem gegenüber dem Stand der Technik verringerten Aufwand möglich wird.

Diese Aufgabe wird erfindungsgemäß gelöst durch ein Verfahren nach Anspruch 1.

Gemäß der Erfindung besitzen also zwei gegeneinander austauschbare Kameras jeweils eine Bezugsfläche der genannten Art, welche in vorgegebener Weise an einer Koppelfläche befestigt werden kann. Durch die jeweils definierte Relativposition zwischen Bezugsfläche und Wirkrichtung der optischen Bauteile der jeweiligen Kamera kann erreicht werden, dass jede der beiden gegeneinander austauschbaren Kameras in Bezug auf die Koppelfläche jeweils exakt die gleiche Wirkrichtung besitzt. Dabei ist es natürlich bevorzugt, wenn bei jeder der untereinander austauschbaren Kameras die Relativposition zwischen der Wirkrichtung der optischen Bauteile und der Bezugsfläche untereinander jeweils identisch ist. Auf die genannte Art und Weise können Kameras in kürzester Zeit gegeneinander ausgetauscht werden, indem lediglich die eine Kamera von der Koppelfläche gelöst und die andere Kamera anschließend mit der Koppelfläche verbunden wird, wobei sichergestellt ist, dass die Wirkrichtung der optischen Bauteile der neu an der Koppelfläche befestigten Kamera mit derjenigen Wirkrichtung übereinstimmt, die die optischen Bauteile der zuvor an der Koppelfläche befestigten Kamera besaßen. Es kann auf die erfindungsgemäße Weise sichergestellt werden, dass die Gesichtsfelder der gegeneinander ausgetauschten Kameras untereinander identisch sind und somit eine untereinander jeweils gleiche Lage, insbesondere auch eine untereinander jeweils gleiche Drehlage besitzen.

Von Vorteil ist es, wenn die Koppefläche, an der die gegeneinander austauschbaren Kameras befestigbar sind, an vorgegebenen Positionen Anschlusselemente für die Befestigungs- oder Positionierelemente aufweisen, die an den Bezugsflächen der optischen Vorrichtungen vorgesehen sind. So wird erreicht, dass keine manuelle Ausrichtung der Bezugsfläche gegenüber der Koppelfläche nötig ist, da eine wechselseitige Kopplung nur durch das Herstellen einer Wirkverbindung zwischen den Anschlusselementen der Koppelfläche und den Befestigungs- oder Positionierelementen der Bezugsfläche möglich ist, so dass letztlich durch die genannten Maßnahmen zwingend vorgegeben wird, an welcher Position die Bezugsfläche an der Koppelfläche anzubringen ist. Besonders bevorzugt ist es, wenn die Wirkverbindung zwischen den Anschlusselementen der Koppelfläche und den Befestigungs- oder Positionierelementen der Bezugsfläche die Relativposition zwischen Bezugsfläche und Koppelfläche in allen rotatorischen und translatorischen Freiheitsgraden fest vorgibt.

In jeder Kamera wird ein Speicher für Betriebsdaten vorgesehen, welche zur Festlegung des Betriebsverhaltens der jeweiligen Kamera geeignet sind. Bei diesen Betriebsdaten kann es sich beispielsweise um Steuer-, Konfigurations- und/oder eingelernte Teachdaten handeln, wobei letztere mit der Kamera im konkreten Arbeitsumfeld derselben in Abhängigkeit von diesem Arbeitsumfeld ermittelt bzw. erlernt werden können. Diese erfindungsgemäßen Varianten sind insbesondere dann von Bedeutung, wenn es sich bei der Kamera um ein intelligentes System handelt, dessen Betriebsverhalten nicht fest vorgegeben, sondern auf datentechnischem Wege an die jeweils gegebenen Einsatzbedingungen anpassbar ist. In diesem Fall muss nämlich beim Austausch der Kamera nicht nur sichergestellt werden, dass die korrekte Wirkrichtung der optischen Bauteile vorhanden bleibt, sondern darüber hinaus muss die neue Kamera das gleiche Betriebsverhalten zeigen, wie die vor dem Austausch eingesetzte Kamera.
Dies kann erreicht werden, indem die Daten, welche im Speicher der Kamera abgelegt sind, parallel in einem externen Speicher vorgehalten werden, von wo aus sie problemlos in den Speicher einer neuen Kamera geladen werden können. Zu diesem Zweck besitzt jede Kamera bevorzugt eine Schnittstelle für die Einspeisung aller jeweils erforderlichen Betriebsdaten von dem genannten externen Speichermedium. So wird es möglich, einen Austausch vorzunehmen, ohne dass eine aufwändige Parametrierung der neuen Kamera nötig wäre.

Dies ist bezüglich des beim Austausch zu betreibenden Aufwands besonders vorteilhaft, wenn ein Kamerasystem mit oder ohne integrierte Beleuchtung zur Erkennung vieler unterschiedlicher Objekte ausgelegt ist, welche zuvor in einem aufwändigen Teachprozeß eingelernt wurden. Bei einem Austausch der Kamera kann dann ohne weiteren Aufwand auf die zu einem früheren Zeitpunkt eingelernten, extern gespeicherten Objektdaten zurückgegriffen werden, ohne dass beispielsweise die Objekte selbst zur Verfügung stehen müssen.

Besonders vorteilhaft ist es, wenn das externe Speichermedium im Bereich eines die Kamera speisenden Kabels vorgesehen ist, welches trennbar mit der Kamera verbunden ist. In diesem Fall wird eine auszutauschende Kamera vom Kabel gelöst, woraufhin anschließend eine neue Kamera mit dem Kabel verbunden werden kann. Nach Herstellung dieser Verbindung können dann die im externen Speichermedium gespeicherten Betriebsdaten in den Speicher der neuen Kamera geladen werden. Wenn die neue Kamera dann zudem mit ihrer Bezugsfläche an der Koppelfläche angebracht wird, ist sichergestellt, dass durch den Austausch der Kameras weder deren Betriebsverhalten noch deren Wirkrichtung verändert wurde.
Besonders bevorzugt ist es, wenn die extern, beispielsweise in einem PC oder einer SPS (Speicherprogrammierbaren Steuerung) abgelegten Betriebsdaten automatisch in eine neu an der Koppefläche befestigte oder zu befestigende Kamera geladen werden. Dieser automatische Ladevorgang kann beispielsweise durch die elektrische Kontaktierung der Kamera mit dem genannten Kabel ausgelöst werden.

Erfindungsgemäß weisen die Kameras handeln, insbesondere um Kameras zumindest eine integrierte oder daran angekoppelte Lichtquelle zur Ausleuchtung des Gesichtsfeldes der Kamera auf. Beispielsweise kann eine Kamera mit koaxialer, fest damit verbundener Eigenbeleuchtung zum Einsatz kommen.

Die vorstehend erwähnten, parallel in einem externen Speichermedium abgelegten Betriebsdaten können beim Einsatz einer mit einer Lichtquelle zusammenwirkenden Kamera zum einen zur Festlegung des Betriebsverhaltens der Kamera und zum anderen zur Festlegung des Betriebsverhaltens der Lichtquelle dienen. So kann sichergestellt werden, dass bei einem Austausch von Kamera sowohl das Betriebsverhalten der Kamera als auch das Betriebsverhalten der Lichtquelle unverändert erhalten bleibt und insbesondere immer optimal aufeinander abgestimmt ist.

Die Kamera kann ein Empfangsarray mit N x M Pixeln besitzen, von dem während des Betriebs der Kamera lediglich ein Teilarray mit n x m Pixeln aktivierbar ist, wobei gilt: N > n und M > m. In diesem Fall kann dann die Position des Teilarrays auf dem Empfangsarray zu Zwecken der Positionierung variabel einstellbar sein. Es kann also entweder bereits werksseitig bei Herstellung des Kamerasystems oder aber auch erst bei einem Austausch der Kamera das Gesichtsfeld relativ zur Bezugsfläche pixelgenau eingestellt werden.
Bei einer weiteren Ausführungsform der Erfindung kann jedoch auch gelten N = n und M = m. In diesem Fall erfolgt werksseitig eine genaue Justierung des Kameragesichtsfeldes relativ zur Bezugsfläche.

Die Lichtquellen können z.B. aus einer Vielzahl von Leuchtdioden, insbesondere aus einem Leuchtdiodenarray bestehen. Der Einsatz einer Vielzahl von Leuchtdioden bringt den Vorteil mit sich, dass die Überlagerung der Strahlung der einzelnen Leuchtdioden zu einer Mittelung des Degradationsverhaltens der einzelnen Leuchtdioden über die insgesamt eingesetzte Anzahl von Leuchtdioden führt. Für die Alterung bzw. Degradation der Gesamtlichtquelle ist somit nicht die Alterung einer einzelnen Leuchtdiode sondern der genannte Mittelwert ausschlaggebend.

Die Lichtquelle ist für einen Dauerbetrieb ausgelegt. Die Leistung der Lichtquelle ist durch die Festlegung der der Lichtquelle konstant zugeführten elektrischen Energie einstellbar. Falls die Lichtquelle wiederum aus einer Vielzahl von Leuchtdioden besteht, können die Leistung der einzelnen Leuchtdioden oder einzelnen Gruppen von Leuchtdioden durch die jeweils konstant zugeführten Energien unabhängig voneinander einstellbar sein. Hierdurch wird ebenfalls die gezielte Beeinflussung unterschiedlicher Beleuchtungsbereiche möglich. Auch die genannten Energiewerte können als Betriebsdaten im Sinne der vorstehenden Erläuterungen gehandhabt werden.

Anstelle einer Einstellung der Beleuchtungsstärke kann auch kameraseitig durch eine Verschiebung einer Auswerteschwelle dem Umstand Rechnung getragen werden, dass eine neu eingesetzte Lichtquelle eine andere Beleuchtungsstärke besitzt als die zuvor eingesetzte. Wenn die Beleuchtungsstärke beispielsweise abnimmt, kann auch die Auswerteschwelle, ab der Objekte erkannt werden, entsprechend herabgesetzt werden.

Bei Verwendung einer mit einer Lichtquelle kombinierten Kamera im Sinne der Erfindung kann der Speicher für Betriebsdaten zur Aufnahme einer Matrix von Soll-Grauwerten ausgelegt werden, die vom Empfangs- oder Teilarray der Kamera bei Beleuchtung einer Referenzfläche mittels der Lichtquelle geliefert werden. Diese Matrix kann somit für das gesamte Gesichtsfeld der Kamera vorgeben, welche Empfindlichkeit die kombinierte Anordnung von Kamera und Lichtquelle besitzt. Um beim Austausch einer solchen Kamera genau die gleiche Empfindlichkeitsverteilung der Gesamtanordnung beibehalten zu können, kann die Leistung der neuen Lichtquelle derart eingestellt werden, dass die vom Empfangs- oder Teilarray der jeweils zum Einsatz gelangenden Kamera bei Beleuchtung der Referenzfläche mittels der neuen Lichtquelle gelieferten Grauwerte den gespeicherten Soll-Grauwerten entsprechen. In diesem Fall ist ein Austausch der Gesamtanordnungen von Lichtquelle und Kamera möglich, ohne dass sich das Empfindlichkeitsverhalten der Gesamtanordnung ändert.

Bei allen vorstehend beschriebenen, den Einsatz von Lichtquellen bzw. Beleuchtungsmodulen betreffenden Vorrichtungen und Vorgehensweisen ist es vorteilhaft, das Alterungsverhalten der verwendeten Lichtquellen zu berücksichtigen. Insbesondere kann berücksichtigt werden, dass das zu verschiedenen Zeitpunkten erfolgende Einlernen von Objekten mit verschieden stark gealterten Lichtquellen durchgeführt werden kann. Um diesem Umstand Rechnung zu tragen, kann beispielsweise eine der Lichtquelle zugeordnete Detektionseinheit vorgesehen werden, die die alterungsbedingten Intensitätsänderungen der Lichtquelle erfasst, so dass diese kompensiert werden können. Ebenso kann eine Kompensation aber auch durch Vergleich der beim Einlernvorgang vorhandenen Intensitätswerte mit zuvor gespeicherten Referenzwerten erfolgen.

Weitere bevorzugte Ausführungsformen der Erfindung sind in den Unteransprüchen erläutert.

Die Erfindung wird nachfolgend beispielhaft unter Bezugnahme auf die Zeichnungen beschrieben; in diesen zeigen:
- Fig. 1: eine schematische Seitenansicht einer erfindungsgemäß zum Einsatz gelangenden Kamera, welche mit einer Koppelfläche verbunden ist, und
- Fig. 2: ein Prinzipschaubild für die Veranschaulichung der Positionierung eines Teilarrays innerhalb eines Empfangsarrays.

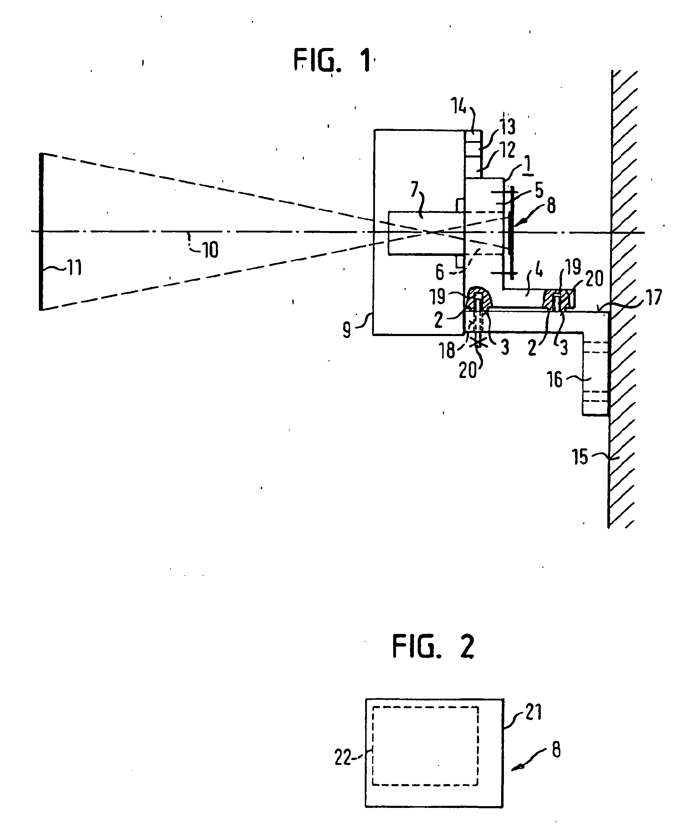

Fig. 1 zeigt in schematischer Seitenansicht einen im Querschnitt im Wesentlichen L-förmigen Montagekörper 1, welcher an seiner Unterseite mit insgesamt vier nach unten ragenden Fortsätzen 2 versehen ist, deren stirnseitige Unterseiten wiederum gemeinsam eine erfindungsgemäße Bezugsfläche 3 bilden. Ebenso könnte eine andere Anzahl von Fortsätzen 2 zum Einsatz kommen. Von den gemäß Fig. 1 zum Einsatz gelangenden vier Fortsätzen 2 sind in Fig. 1 lediglich die beiden vorderen zu sehen, da die hinteren Fortsätze 2 von den vorderen Fortsätzen 2 verdeckt sind. Die Fortsätze 2 sind dabei an dem dünneren, sich in horizontaler Richtung erstreckenden Schenkel 4 des L-förmigen Montagekörpers 1 angeordnet.

Der dickere, sich vertikal erstreckende Schenkel 5 des Montagekörpers 1 verläuft senkrecht zum dünneren Schenkel 4 nach oben und weist eine gestrichelt angedeutete Durchbrechung 6 auf, die zum Durchtritt von Empfangslicht geeignet ist. Im Bereich der Durchbrechung 6 ist an dem dickeren Schenkel 5 des Montagekörpers 1 ein Objektiv 7 angebracht.

Auf der dem Objektiv 7 abgewandten Seite des dickeren Schenkels 5 des Montagekörpers 1 ist ein Empfangsarray 8 vorgesehen, wobei dieses Empfangsarray 8 wiederum im Bereich der Durchbrechung 6 angeordnet ist.

Auf der das Objektiv 7 tragenden Seite des dickeren Schenkels 5 des Montagekörpers 1 ist um das Objektiv 7 herum eine mit dem Montagekörper 1 gekoppelte Lichtquelle 9 vorgesehen, welche aus einer Vielzahl von in Fig. 1 nicht einzeln dargestellten Leuchtdioden besteht.

Die optische Achse 10 des Objektivs 7, die letztlich der Wirkrichtung der in Fig. 1 dargestellten Kamera entspricht, erstreckt sich parallel zur Längsachse der Durchbrechung 6 des dickeren Schenkels 5 des Montagekörpers 1 und auch durch das Zentrum des Empfangsarrays 8, wobei die Empfangsfläche des Empfangsarrays 8 beispielsweise senkrecht zur optischen Achse 10 des Objektivs 7 verlaufen kann. Insofern sind Empfangsarray 8, Durchbrechung 6 und Objektiv 7 durch ihre Befestigung am dickeren Schenkel 5 des Montagekörpers 1 zueinander ausgerichtet. Das Empfangsarray 8 besitzt dabei entsprechend den optischen Eigenschaften des Objektivs 7 ein von der Kamera gemäß Fig. 1 beabstandetes Gesichtsfeld 11, welches über das Objektiv 7 auf das Empfangsarray 8 abgebildet werden kann.

Empfangsarray 8, Objektiv 7 und Lichtquelle 9 werden von einer Steuervorrichtung 12 beaufschlagt, die in einem Speicher 13 abgelegte Betriebsdaten für die genannten Komponenten verarbeitet und die genannten Komponenten somit in der gewünschten Weise ansteuert. Beispielsweise können mittels der Steuervorrichtung 12 in Abhängigkeit von den im Speicher 13 abgelegten Betriebsdaten eine Zoomfunktion des Objektivs 7, die Leistung der einzelnen Leuchtdioden der Lichtquelle 9 oder die Belichtungszeiten dieser Leuchtdioden beeinflusst sowie die Pixel des Empfangsarrays 8 einzeln aktiviert werden. Auch eine Auswertung der vom Empfangsarray 8 gelieferten Daten kann innerhalb der Steuervorrichtung 12 erfolgen.

Ferner ist eine Schnittstelle 14 vorgesehen, über die Betriebsdaten in den Speicher 13 von einem externen, in Fig. 1 nicht dargestellten Speicher eingelesen werden können.

Fig. 1 zeigt ferner einen an einer Wand 15 angeordneten L-förmigen Träger 16, welcher mit seinem vertikal verlaufenden Schenkel an der Wand 15 angebracht ist. Die Oberseite des horizontal verlaufenden Schenkels des Trägers 16 ist als Koppelfläche 17 ausgebildet, an die die Bezugsfläche 3 des Montagekörpers 1 angekoppelt werden kann.

Im horizontal verlaufenden Schenkel des Trägers 16 sind zwei vertikal verlaufende Durchbrechungen 18 vorgesehen, deren Positionen den Positionen von zwei Fortsätzen 2 des dünneren Schenkels 4 des Montagekörpers 1 entsprechen. Die beiden genannten Fortsätze 2 sind wiederum mit vertikal ausgerichteten Gewinden 19 versehen, in die Schrauben 20 von unten eingeschraubt werden können, welche zuvor durch die Durchbrechungen 18 des Trägers 16 gesteckt wurden.
Ferner sind am horizontal verlaufenden Schenkel des Trägers 16 zwei Stifte 20 befestigt, deren Positionen den Positionen der beiden verbleibenden Fortsätze 2 des dünneren Schenkels 4 des Montagekörpers 1 entsprechen. Die beiden genannten Fortsätze 2 sind wiederum mit vertikal ausgerichteten Bohrungen 19 versehen, in die die genannten Stifte 20 von unten eingesteckt werden können. Folglich ist der Montagekörper 1 am Träger 16 über die zwei Schrauben und die zwei Stifte 20 in einer definierten, fest vorgegebenen Relativposition befestigbar.
Bei einer alternativen Ausführungsform wäre es auch möglich, die Fortsätze am Träger 16 und die Durchbrechungen am dünneren Schenkel 4 des Montagekörpers 1 vorzusehen.

Bei einem Austausch des Montagekörpers 1 mit allen daran angekoppelten Komponenten gegen einen weiteren Montagekörper mit entsprechenden, an diesen angekoppelten Komponenten müssen lediglich die zwei Schrauben 20 von dem auszutauschenden Montagekörper 1 gelöst und anschließend mit dem neuen Montagekörper verbunden werden. Durch die beschriebene Anordnung wird sichergestellt, dass der neue Montagekörper relativ zur Koppelfläche 17 die gleiche Position besitzt, wie der vor dem Austausch vorhandene Montagekörper 1. Gleiches gilt für die optischen Achsen 10 und somit die Wirkrichtungen der optischen Bauteile der beiden gegeneinander ausgetauschten Vorrichtungen.

Um das Betriebsverhalten einer neu mit der Koppelfläche 17 verbundenen Vorrichtung an das Betriebsverhalten einer ausgetauschten Vorrichtung anzupassen bzw. um beide Betriebsverhalten gleich zu schalten, können extern gespeicherte Betriebsdaten der Vorrichtung über die Schnittstelle 14 in den Speicher 13 der neuen Vorrichtung eingelesen werden. Hierdurch bleibt dann durch den Austausch der Vorrichtungen gegeneinander nicht nur die optische Achse 10 sondern auch das Betriebsverhalten sämtlicher optischer Komponenten unverändert.

Fig. 2 zeigt schematisch ein Empfangsarray 8, wie es in einer Vorrichtung gemäß Fig. 1 zum Einsatz gelangen kann.

Das Empfangsarray 8 besitzt eine Matrix von N x M Pixeln, welche gleichmäßig innerhalb einer ersten Fläche angeordnet sind, die gemäß Fig. 2 durch ein Rechteck 21 begrenzt wird. Innerhalb dieser Matrix kann eine aktive Teilmatrix mit n x m Pixeln definiert werden, die von dem Rechteck 22 begrenzt ist, welches innerhalb des Rechtecks 21 liegt. Die außerhalb des Rechtecks 22 befindlichen Pixel sind inaktiv.

Das Rechteck 22 kann nun beispielsweise durch die Steuervorrichtung 12 gemäß Fig. 1 derart innerhalb des Rechtecks 21 verschoben werden, dass sich ein jeweils gewünschtes Gesichtsfeld des Empfangsarrays 8 einstellt. Dieser Vorgang dient, wie bereits erwähnt, zur exakten, pixelgenauen Positionierung des gewünschten Gesichtsfeldes 11 relativ zur Bezugsfläche 3.

### Bezugszeichenliste

- 1: Montagekörper
- 2: Fortsätze
- 3: Bezugsfläche
- 4: dünnerer Schenkel
- 5: dickerer Schenkel
- 6: Durchbrechung
- 7: Objektiv
- 8: Empfangsarray
- 9: Lichtquelle
- 10: optische Achse
- 11: Gesichtsfeld
- 12: Steuervorrichtung
- 13: Speicher
- 14: Schnittstelle
- 15: Wand
- 16: Träger
- 17: Koppelfläche
- 18: Durchbrechungen
- 19: Gewinde/Bohrung
- 20: Schrauben/ Stifte
- 21: Gesamtmatrix
- 22: Teilmatrix

## Patentansprüche

1. Verfahren zum Austausch zumindest zweier gegeneinander austauschbarer Kameras (7, 8) in einem Kamerasystem, wobei die Kameras (7, 8) jeweils zumindest eine integrierte oder daran angekoppelte Lichtquelle (9) zur Ausleuchtung des Gesichtfeldes (11) der Kamera (7, 8) und in eine definierte Wirkrichtung ausgerichtete optische Bauteile aufweisen, bei dem
- jede Kamera (7, 8) mit zumindest je einer Bezugsfläche (3) versehen ist, welche eine definierte Relativposition zu der Wirkrichtung der optischen Bauteile der jeweiligen Kamera (7, 8) aufweist,
- die Bezugsfläche (3) mittels ihr zugeordneter Befestigungs- oder Positionierelemente (19) an eine Koppelfläche (17) eines Trägers (16) angekoppelt wird,
- die Befestigungs- oder Positionierelemente (19) eine feste Relativposition zwischen Bezugs- und Koppelfläche (3, 17) definieren,
- bei einem Austausch der Kameras (7,8) eine Kamera (7, 8) von der Koppelfläche (17) gelöst und eine andere Kamera (7, 8) anschließend mit der Koppelfläche (17) verbunden wird,
- beim Ankoppeln der Bezugsfläche (3) an die Koppelfläche (17) alle jeweils erforderlichen Betriebsdaten, die zur Festlegung des Betriebsverhaltens der jeweiligen Kamera (7, 8) geeignet sind, von einem externen Speichermedium über eine an der Kamera (7, 8) vorgesehene Schnittstelle (14) in einen Speicher (13) der jeweiligen Kamera (7, 8) eingespeist werden, wobei zusätzlich auch Betriebsdaten zur Festlegung des Betriebsverhaltens der Lichtquelle (9) eingespeist werden, und
- die Lichtquelle (9) für einen Dauerbetrieb ausgelegt ist, wobei die Leistung der Lichtquelle (9) durch die Festlegung der der Lichtquelle (9) konstant zugeführten elektrischen Energie als besagte Betriebsdaten eingestellt wird und/ oder wobei die Leistung der einzelnen Leuchtdioden oder einzelnen Gruppen von Leuchtdioden durch die jeweils konstant zugeführte elektrische Energie als besagte Betriebsdaten unabhängig voneinander eingestellt wird.

2. Verfahren Anspruch 1,
**dadurch gekennzeichnet,**
**dass** die Koppelfläche (17) an vorgegebenen Positionen Anschluselemente (18) für die Befestigung- oder Positionierelemente (19) der Bezugsfläche (3) aufweist.

3. Verfahren nach einem der vorhergehenden Ansprüche,
**dadurch gekennzeichnet,**
**dass** mit der definierten Relativposition zwischen der Bezugsfläche (3) und der Wirkrichtung der optischen Bauteile (7, 8) sowie mit der definierten Relativposition zwischen Bezugs- und Koppelfläche (3, 17) die jeweiligen Relativpositionen in allen rotatorischen und translatorischen Freiheitsgraden festgelegt sind.

4. Verfahren nach einem der vorhergehenden Ansprüche,
**dadurch gekennzeichnet,**
**dass** jede Kamera (7, 8) mit je einem, die zumindest eine Bezugsfläche (3) aufweisenden Montagekörper (1) gekoppelt ist.

5. Verfahren nach einem der vorhergehenden Ansprüche,
**dadurch gekennzeichnet,**
**dass** das externe Speichermedium im Bereich eines die Kamera speisenden Kabels vorgesehen ist, welches trennbar mit der optischen Vorrichtung verbunden ist.

6. Verfahren einem der vorhergehenden Ansprüche,
**dadurch gekennzeichnet,**
**dass** die Kamera (7, 8) ein Empfangsarray (8, 21) mit N x M Pixeln besitzt, von dem während des Betriebs der Kamera (7, 8) lediglich ein Teilarray (22) mit n x m Pixeln aktivierbar ist, wobei gilt N>n und M>m, wobei insbesondere die Position des Teilarrays (22) auf dem Empfangsarray (8, 21) zu Zwecken der Positionierung relativ zur Bezugsfläche (3) variabel einstellbar ist.

7. Verfahren nach einem der vorhergehenden Ansprüche, **dadurch gekennzeichnet,**
**dass** die Lichtquelle (9) aus einer Vielzahl von Leuchtdioden, insbesondere aus einem Array von Leuchtdioden besteht.

## Claims

1. A method for exchanging at least two mutually exchangeable cameras (7, 8) in a camera system, wherein the cameras (7, 8) each have at least one integrated light source (9) or a light source (9) coupled thereto for illuminating the field of view (11) of the camera (7, 8) and optical components aligned in a defined direction of action, wherein
- each camera (7, 8) is provided with at least one respective reference surface (3) which has a defined relative position to the direction of action of the optical components of the respective camera (7, 8);
- the reference surface (3) is coupled to a coupling surface (17) of a carrier (16) by means of fastening or positioning elements (19) associated with it;
- the fastening or positioning elements (19) define a fixed relative position between the reference surface and the coupling surface (3, 17);
- on an exchange of the cameras (7, 8), a camera (7, 8) is released from the coupling surface (17) and another camera (7, 8) is subsequently connected to the coupling surface (17);
- on the coupling of the reference surface (3) to the coupling surface (17), all the respectively required operating data which are suitable for fixing the operating behaviour of the respective camera (7, 8) are fed into a memory (13) of the respective camera (7, 8) by an external memory medium via an interface (14) provided at the camera (7, 8), with additionally operating data also being fed in for fixing the operating behaviour of the light source (9); and
the light source (9) is designed for permanent operation, with the power of the light source (9) being set by the fixing of the electric energy constantly supplied to the light source (9) as said operating data; and/or wherein the power of the individual light-emitting diodes or of individual groups of light-emitting diodes is set independently of one another by the respective constantly supplied electric energy as said operating data.

2. A method in accordance with claim 1,
**characterised in that**
the coupling surface (17) has connection elements (18) for the fastening or positioning elements (19) of the reference surface (3) at preset positions.

3. A method in accordance with one of the preceding claims, **characterised in that**
the respective relative positions are fixed in all rotary and translatory degrees of freedom by the defined relative position between the reference surface (3) and the direction of action of the optical components (7, 8) as well as by the defined relative position between the reference surface and the coupling surface (3, 17).

4. A method in accordance with any one of the preceding claims, **characterised in that**
each camera (7, 8) is coupled to a respective assembly body (1) having the at least one reference surface (3) .

5. A method in accordance with any one of the preceding claims, **characterised in that**
the external memory medium is provided in the region of a cable which feeds the camera and which is separably connected to the optical apparatus.

6. A method in accordance with any one of the preceding claims, **characterised in that**
the camera (7, 8) has a reception array (8, 21) having N x M pixels, of which only a part array (22) having n x m pixels can be activated during the operation of the camera (7, 8), wherein N>n and M>m applies, and wherein in particular the position of the part array (22) is variably settable on the reception array (8, 21) for purposes of positioning relative to the reference surface (3).

7. A method in accordance with any one of the preceding claims, **characterised in that**
the light source (9) comprises a plurality of light emitting diodes, in particular an array of light emitting diodes.

## Revendications

1. Procédé pour l'échange d'au moins deux caméras (7, 8) interchangeables dans un système de caméras, dans lequel les caméras (7, 8) comportent chacune au moins une source lumineuse (9) soit intégrée soit accouplée à elle-même pour l'éclairage du champ de vision (11) de la caméra (7, 8) et des composants optiques orientés dans une direction active définie, dans lequel
- chaque caméra (7, 8) est dotée d'au moins une surface de référence respective (3) qui comporte une position relative définie par rapport à la direction active des composants optiques de la caméra respective (7, 8),
- la surface de référence (3) est accouplée à une surface d'accouplement (17) d'un support (16) au moyen d'éléments de fixation ou de positionnement (17) associés à la surface de référence,
- les éléments de fixation ou de positionnement (19) définissent une position relative fixe entre la surface de référence et la surface d'accouplement (3, 17),
- lors d'un échange des caméras (7, 8) une caméra (7, 8) est détachée de la surface d'accouplement (17) et une autre caméra (7, 8) est ensuite reliée à la surface d'accouplement (17),
- lors de l'accouplement de la surface de référence (3) à la surface d'accouplement (17), toutes les données de fonctionnement respectivement nécessaires, qui conviennent à déterminer le comportement de fonctionnement de la caméra respective (7, 8), sont injectées depuis un support mémoire externe via une interface (14) prévue sur la caméra (7, 8) vers une mémoire (13) de la caméra respective (7, 8), et des données de fonctionnement pour déterminer le comportement de fonctionnement de la source lumineuse (9) sont également additionnellement injectées, et
- la source lumineuse (9) est conçue pour un fonctionnement permanent, tel que la puissance de la source lumineuse (9) est réglée par détermination de l'énergie électrique constamment amenée à la source lumineuse (9), à titre desdites données de fonctionnement, et/ou que la puissance des diodes lumineuses individuelles ou de groupes individuels de diodes lumineuses est réglées indépendamment les unes des autres au moyen de l'énergie électrique respective constamment amenée.

2. Procédé selon la revendication 1,
**caractérisé en ce que** la surface d'accouplement (17) comprend à des positions prédéterminées des éléments de jonction (18) pour les éléments de fixation ou de positionnement (19) de la surface de référence (3).

3. Procédé selon l'une des revendications précédentes,
**caractérisé en ce que** les positions relatives respectives sont fixées dans tous les degrés de liberté en rotation et en translation au moyen de la position relative définie entre la surface de référence (3) et la direction active des composants optiques (7, 8) ainsi qu'au moyen de la position relative définie entre la surface de référence et la surface d'accouplement (3, 17).

4. Procédé selon l'une des revendications précédentes,
**caractérisé en ce que** chaque caméra (7, 8) est couplée à un corps de montage respectif (1), qui est comporte ladite au moins une surface de référence (3).

5. Procédé selon l'une des revendications précédentes,
**caractérisé en ce que** le support mémoire externe est prévu dans la zone d'un câble qui alimente la caméra et qui est relié au dispositif optique de manière séparable.

6. Procédé selon l'une des revendications précédentes,
**caractérisé en ce que** la caméra (7, 8) possède un réseau récepteur (8,21) avec N x M pixels, duquel seul un réseau partiel (22) avec n x m pixels peut être activé pendant le fonctionnement de la caméra (7, 8), avec les relations N > n et M > m, et dans lequel la position du réseau partiel (22) sur le réseau récepteur (8, 21) est en particulier réglable de manière variable dans le but du positionnement par rapport à la surface de référence (3).

7. Procédé selon l'une des revendications précédentes,
**caractérisé en ce que** la source lumineuse (9) est constituée d'une pluralité de diodes lumineuses, en particulier d'un réseau de diodes lumineuses.
